# EUROPEAN PATENT APPLICATION

(11) **EP 2 716 154 A1**
(43) Date of publication of application: **09.04.2014**
(21) Application number: 12187300.4
(22) Date of filing: 04.10.2012
(51) Int. Cl.: A01K 5/02

(54) **Improved animal feeding trough**

(71) Applicant: Hermitage Technology Limited, Kilkenny (IE)
(72) Inventor: Nolan, Edward, Kilkenny (IE)
(74) Representative: Gates, Marie Christina Esther

(57) **Abstract**

A feed trough 1 is described for feeding an animal comprising a trough body which has a base portion 2 and at least one side wall portion, the trough body adapted to retain feed, and a feed supply tube 5 connectable at one end to a reservoir of animal feed, and connectable at the other end to the feed trough characterised in that the trough is elongate and the feed supply tube is connectable to the feed trough at at least two locations adjacent the ends of the trough.

## Description

### Field of the Invention

The present invention relates to feeding troughs for animals, suitable for the continuous feeding of a number of animals at one time. The trough is particularly suitable for animals fed on a liquid or a semi-liquid diet. In particular, it is suitable for feeding pigs in order to reduce feed wastage.

### Background to the Invention

There are currently a number of feed troughs on the market into which either liquid feed or water are dispensed for feeding animals. Typically liquid feed troughs on the market have a feed dispenser unit, which is located close to the centre of the trough, or they may have two or more feed dispensers located at two or more locations along the length of the trough. The disadvantage of this system is that the feed which is dispensed can flow to the end of the feed trough and there it often dries out and becomes stale and rancid. In particular, pigs prefer to eat fresh feed which is dispensed near the liquid dispense points. Pigs generally consume the liquid feed at the point of entry to the feeding trough. If the pigs are fed to appetite, they will not consume all the feed in the feeding trough before the subsequent feed is dispensed. Often feed remains at the ends of the trough and is not consumed. The reason for this is that after the feed has been in the trough the cereals absorb the water and settle at the trough ends. If not consumed quickly, this feed becomes dry and stale and is not palatable to the pigs. The uneaten previously dispensed feed is pushed to the extremity of the trough, when it dries out further. When the liquid feed dries out, it becomes less palatable to the pig and the animals use their noses to toss or root this dried feed out of the pig trough onto the ground where it becomes costly waste as it is trampled underfoot.

Alternatively, the stockperson has to manually remove this stale feed from the trough as it can contaminate the subsequent feed and increase the wastage.

The highest cost in pig production today is the cost of feed. Feed wastage is variable and common to all pig production farms. Where wastage is significant it represents asignificant economic loss to the farmer.

### Object of the Invention

The object of the present invention is to provide a feed trough which reduces feed wastage. A further object is to provide a feed trough which is robust. A further object is to provide a trough which will reduce the manual labour involved with cleaning feeding troughs. A still further object is to to provide a trough which will enhance pig performance as a result of the provision of the fresh feed in the feeding trough. The trough of the invention is also robust, cheap and simple to construct.

### Summary of the Invention

According to the present invention there is provided a feed trough for an animal comprising a trough body which has a base portion at least one side wall portion, the trough body adapted to retain feed, and a feed supply tube connectable at one end to a reservoir of animal feed, and connectable at the other end to the feed trough **characterised in that** the trough is elongate and the feed supply tube is connectable to the feed trough at at least two locations adjacent the ends of the trough.

Suitably the feed trough is rectangular and has two long side walls and two short side walls, all of the side walls being connected to the base portion.

Preferably, the supply tube is connectable to the trough body at either end of the elongate body portion. The supply tube may be connected to the trough through the short side walls. The feed supply tube may be V-shaped or U-shaped, with the two outer ends of the V or U connected to either short side wall of the elongate feed trough through a feed inlet port and the closed portion of the V or U being connected to the feed reservoir through a reservoir inlet port.

The feed supply tube may be provided with a support structure to brace the arms of the V or U shaped tube. This arrangement provides stability to the feed supply tubes, but at the same time prevents the animals from walking across the feed trough, which may result in damage to the trough.

The trough may also be provided with a plurality of separators which divide the upper open face of the trough into individual feeding stations. Individual animals can thus feed at individual stations within the trough. The separators serve to separate each pigs own feeding space, but the animals are eating from a common trough, i.e. the seperators do not separate the feed in each section for each individual pig. They only separate each pigs' access to a unique area of the common trough.

In use the trough can dispense the liquid feed through both ends of the feed trough at one time, or at intermittent times. In addition it can dispense feed from either end intermittently. The structure of the trough allows the liquid feed to flow or to be pumped into the trough through the trough ends, thereby flushing any feed from the previous feed batch towards the centre of the trough. The trough of the invention does significantly reduce feed wastage at the ends of the trough because the flushing effect of the feed entering at the ends of the trough ensures that fresh feed is always pumped into the trough and the feed is less likely to dry out.

The dispensing of feed may be controlled by an electronic feed sensor. The feed sensor may be located at the centre of the trough and may function to prevent liquid feed being dispensed into the trough if there is already liquid or feed in contact with sensor from the previous feed batch.

### Brief Description of the Drawings

Figure 1 is a one embodiment of a feed trough in accordance with the present invention.

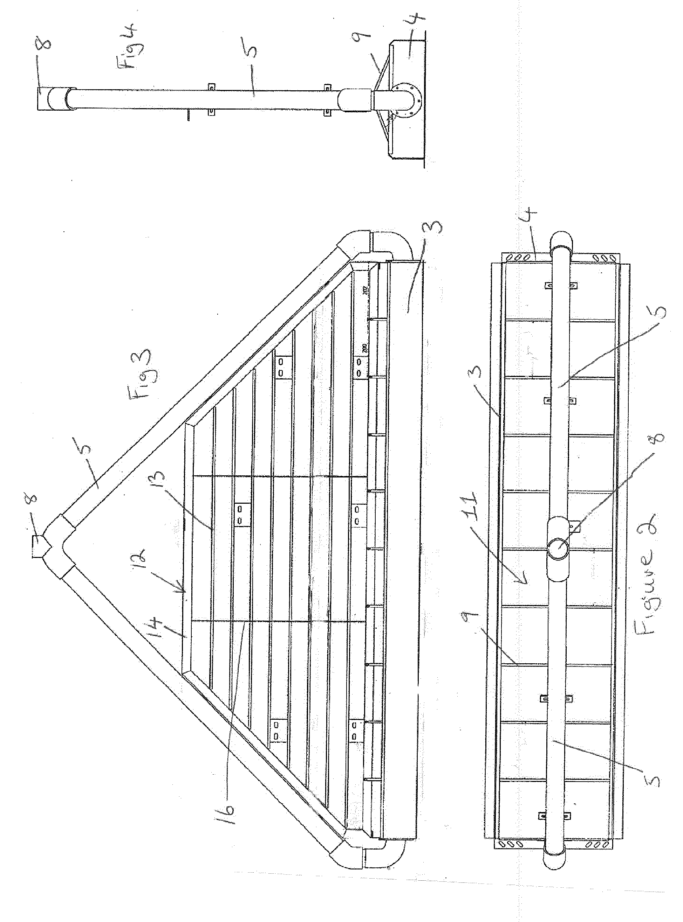

Figure 2 is a plan view of the feed trough from above.
Figure 3 is a an end elevation of the feed trough, and
Figure 4 is a side elevation of the feed trough of the present invention.

### Detailed Description of the Drawings

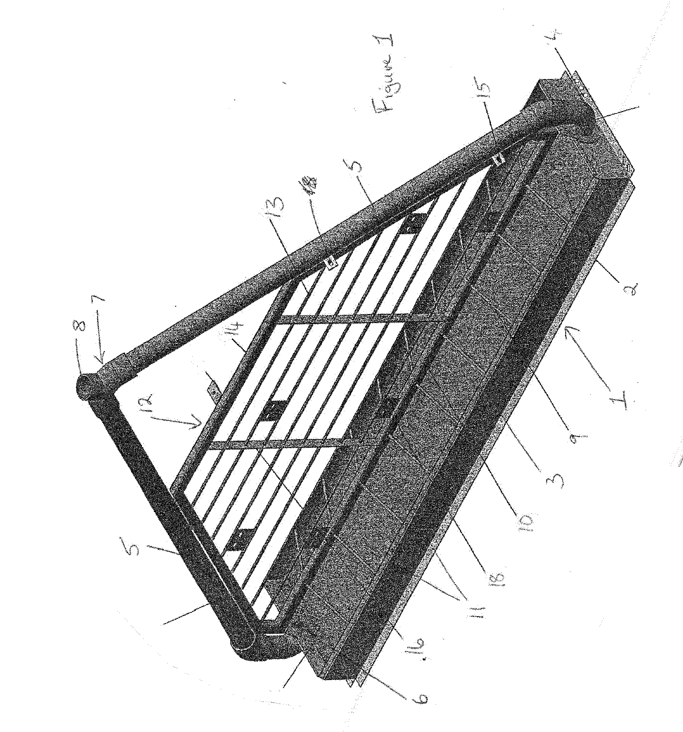

As shown in figure 1 the feed trough (1) of the present invention comprises an elongate trough body, having a base (2) and four side walls. The trough is open at the top. The trough body has two long side walls (3) and two short side walls (4). The trough body also comprises at least two feed supply tubes (5) which are connected to the short side walls (4). Suitably the two supply tubes (5) form a V-shaped structure. The open or remote ends of the V shaped tube (5) are connected to the short side walls (5) of the trough body through a feed inlet port (6). Each arm of the V-shaped inlet tube (5) meets at the closed portion (7) of the V where they are connected to a single reservoir inlet tube (8) which in turn is connected to the feed reservoir (not shown).

The trough body is provided with a series of separators (9) connected between the upper ends of the opposite long side walls (3) across the top, open face of the feed trough (1). These separators (9) are linked by a reinforcing strut (10) running along the centre line of the trough body and serve to separate the feed trough (1) into individual feeding stations (11) so that one animal can feed at each section. The separators thus separate each pigs' access to a unique area of the common trough.

The feed trough (1) is also provided with a support structure (12) connecting the arms of the V shaped feed supply tube (5). The support structure (12) comprises a plurality of horizontal struts (13) within a generally V shaped frame (14). The frame (14) is mounted between the feed supply tubes (5) where it provides support, and is held in place by brackets (15). Vertical struts (16) support the horizontal struts (13) within the frame (14). The frame (14) also prevents animals walking across the trough (1) and causing damage to it.

The base of the trough (1) may be provided with an electronic sensor (17), held in place by a probe bracket (18), which can detect whether there is liquid feed in the trough (1). If the sensor (17) determines that there is feed in the trough (1), a signal is sent to the computer-controlled reservoir, and no further feed is released into the trough. If the sensor (17) determines that the trough (1) is empty, a signal is sent to the feed reservoir and fresh feed is released into the trough. As is conventional in animal feeding, the sensor (17) can check feed levels in the feed trough (1) several times a day.

In use if the feed sensor in the base of the trough determines that there is no feed currently in the trough, liquid feed is released from the feed tank through the V shaped tube and into the trough. Since the feed is fed in through either end of the trough, feed is flushed towards the centre of the trough. When the sensors senses that there is feed in the trough, the signal which it passes back to the feed tank prevents further liquid feed from being dispensed into the trough. The liquid feed flows or is pumped into the trough through the trough ends, thereby flushing any feed from the previous batch of feed towards the centre of the trough, where it is eaten by the animals. As a result there is a no stale or leftover feed caught at the ends of the trough at any time. This substantially reduces the amount of feed wastage.

The trough can be made of sheet metal, stainless steel, plastic materials or the like, and can be placed on the ground in an animal feeding house. The trough of the invention is suitable to feed pigs from approximately 6Kgs of weight to approximately 200Kgs of weight and is suitable for all elongated feed troughs of various lengths and widths.

The words "comprises/comprising" and the words "having/including" when used herein with reference to the present invention are used to specify the presence of stated features, integers, steps or components but does not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

## Claims

1. A feed trough for an animal comprising a trough body which has a base portion and at least one side wall portion, the trough body adapted to retain feed, and a feed supply tube connectable at one end to a reservoir of animal feed, and connectable at the other end to the feed trough **characterised in that** the trough is elongate and the feed supply tube is connectable to the feed trough at at least two locations adjacent the ends of the trough.

2. A feed trough as claimed in claim 1 which is rectangular and has two long side walls and two short side walls, all of the side walls being connected to the base portion.

3. A feed trough as claimed in claim 1 or 2 wherein the supply tube is connectable to the trough body at either end of the elongate body portion on the short side wall.

4. A feed trough as claimed in any preceding claim wherein the feed supply tube is V-shaped or U-shaped, with the two outer ends of the V or U connected to either short side wall of the elongate feed trough through a feed inlet port and the closed portion of the V or U being connected to the feed reservoir through a reservoir inlet port.

5. A feed trough as claimed in any preceding claim wherein the feed supply tube is provided with a support structure to brace the arms of the V or U shaped tube.

6. A feed trough as claimed in any preceding claim wherein the trough further comprises an electronic feed sensor to control dispense of feed into the trough.

7. A feed trough as claimed in claim 6 wherein the feed sensor is located substantially at the centre of the trough.

8. A feed trough as claimed in any preceding claim wherein the trough is provided with a plurality of separators which divide the upper open face of the trough into individual feeding stations
